# EUROPEAN PATENT APPLICATION

(11) **EP 1 873 623 A2**
(43) Date of publication of application: **02.01.2008**
(21) Application number: 07109110.2
(22) Date of filing: 29.05.2007
(51) Int. Cl.: G06F 3/048

(54) **User interface providing apparatus and method for portable terminal having touchpad**

(30) Priority: 28.06.2006 KR 20060058390
(71) Applicant: Samsung Electronics Co., Ltd., Suwon-si Gyeonggi-do (KR)
(72) Inventor: Park, Won Joo c/o Samsung Electronics Co., Ltd., Gyeonggi-do (KR); Lim, Dok Shin c/o Samsung Electronics Co., Ltd., Gyeonggi-do (KR); Shin, Young Sun c/o Samsung Electronics Co., Ltd., Gyeonggi-do (KR); Kim, Hyo Young c/o Samsung Electronics Co., Ltd., Gyeonggi-do (KR); Ahn, Yu Mi c/o Samsung Electronics Co., Ltd., Gyeonggi-do (KR)
(74) Representative: Zimmer, Franz-Josef

(57) **Abstract**

A method and apparatus for user interface are disclosed that include: a display unit for displaying, in response to a request for a lower menu level of a specific menu item, at least one menu item of the requested lower menu level; a menu determiner for determining existence of a lower level menu item of a displayed menu item; an input interface unit for inputting a scroll event from the touchpad; an event processor for moving, in response to input of a scroll event, a highlight between displayed menu items; and a controller for controlling, if a highlighted menu item has a lower menu level, a display operation to simultaneously display the highlighted menu item and lower-level menu items, and to place the highlight on a lower-level menu item.

## Description

### BACKGROUND OF THE INVENTION

### 1. Field of the Invention

The present invention relates generally to a portable terminal having a touchpad and, more particularly, to a method and apparatus for providing an effective menu display.

### 2. Description of the Related Art

Various portable terminals have been developed in recent years. A mobile communication terminal is one of the most popularized portable terminals.

For user convenience, a mobile communication terminal provides user interface features to display various menus and to aid easy selection of a desired function through menu navigation.

Along with ever-diversifying user interface features of a mobile communication terminal, the number of menu items to be displayed increases. As a result, to perform a desired function, the number of user inputs necessary to select a corresponding menu item increases, causing user inconvenience.

To solve this problem, shortcut keys are provided. By inputting a shortcut key, the user can directly execute a desired function associated with the shortcut key.

However, in a menu structure, locations of those menu items selectable by shortcut keys are not necessarily visible to the user. In addition, because of a decreasing number of keys provided on mobile communication terminals due to miniaturization of mobile communication terminals, shortcut keys can be assigned to only a limited number of functions.

In a conventional menu structure of a mobile communication terminal, because the user does not know about lower-level menu items subordinate to a current menu item, the user may have to select a number of lower-level menu items in sequence in order to execute a desired function associated with a particular lower-level menu item. For example, for editing a new text message, the user presses the 'menu' button and selects a menu item 'message' among displayed menu items. In response to selection of the menu item 'message', the mobile communication terminal displays a menu item 'message box', a menu item 'new message composition' and the like, as lower-level menu items of the menu item `message' . The user selects the menu item 'new message composition' , and the mobile communication terminal then displays a message edit window. The user then composes a desired message in the message edit window.

### SUMMARY OF THE INVENTION

The present invention has been made in view of the above problems, and an object of the present invention is to provide a method and apparatus for a user interface providing a touchpad-equipped portable terminal wherein a particular menu item and its lower-level menu items are displayed together.

Another object of the present invention is to provide a method and apparatus for a user interface providing a touchpad-equipped portable terminal wherein the user can simultaneously navigate a particular menu item and its lower-level menu items using scroll events.

In accordance with an embodiment of the present invention, there is provided an apparatus providing a user interface for a portable terminal having a touchpad, including a display unit for displaying, in response to a request input through the touchpad for a lower menu level of a specific menu item, at least one menu item belonging to the requested lower menu level; a menu determiner for determining existence of a lower level menu item of a displayed menu item; an input interface unit for inputting a scroll event from the touchpad; an event processor for moving, in response to input of a scroll event, a highlight between displayed menu items; and a controller for controlling, if a highlighted menu item has a lower menu level, a display operation to simultaneously display the highlighted menu item and menu items of the lower menu level, and to place the highlight on one of a plurality of lower-level menu items.

In accordance with another embodiment of the present invention, there is provided a method for providing a user interface providing for a portable terminal having a touchpad, including displaying, in response to a request input through the touchpad for a lower menu level of a specific menu item, at least one menu item belonging to the requested lower menu level; determining existence of a lower level menu item of the at least one displayed menu item; moving, in response to input of a scroll event from the touchpad, a highlight between displayed menu items; and simultaneously displaying, if a highlighted menu item has a lower menu level, the highlighted menu item and menu items of the lower menu level, and placing the highlight on one of a plurality of lower-level menu items .

In a feature of the present invention, when a particular menu item belonging to a current menu level has a lower menu level, current-level menu items and lower-level menu items belonging to the lower menu level are simultaneously displayed. Hence, lower-level menu items can be known in advance without explicit selection of a correspondingcurrent-level menu item, thereby enhancing menu selection convenience. Further, in response to input of a scroll event, the highlight is moved directly from a current-level menu item to a lower-level menu item, thereby reducing the number of key inputs necessary for desired menu selection.

### BRIEF DESCRIPTION OF THE DRAWINGS

The above and other objects, features and advantages of the present invention will be more apparent from the following detailed description in conjunction with the accompanying drawings, in which:
FIG. 1 illustrates a configuration of a user interface providing apparatus according to the present invention;
FIG. 2 is a flow chart illustrating a user interface providing method according to an embodiment of the present invention;
FIGS. 3A and 3B are flow charts illustrating procedures to display lower-level menu items in the method of FIG. 2;
FIGS. 4A to 4E are display screen representations illustrating a series of steps of the method of FIG. 2; and
FIGS. 5A and 5B are display screen representations illustrating another series of steps of the method of FIG. 2.

### DETAILED DESCRIPTION OF PREFERRED EMBODIMENTS

Hereinafter, preferred embodiments of the present invention are described in detail with reference to the accompanying drawings. The same reference symbols identify the same or corresponding elements in the drawings. Some constructions or processes known in the art may be not described to avoid obscuring the invention with unnecessary detail.

In the description, a scroll event corresponds to moving a finger on the touchpad in a particular direction. A scroll event is used, for example, to move the highlight between displayed menu items. A touch event corresponds to a quick touching contact of a finger to the touchpad. For example, a touch event is used to execute a function associated with a highlighted menu item, and to enter into, if a lower menu level exists, the lower menu level.

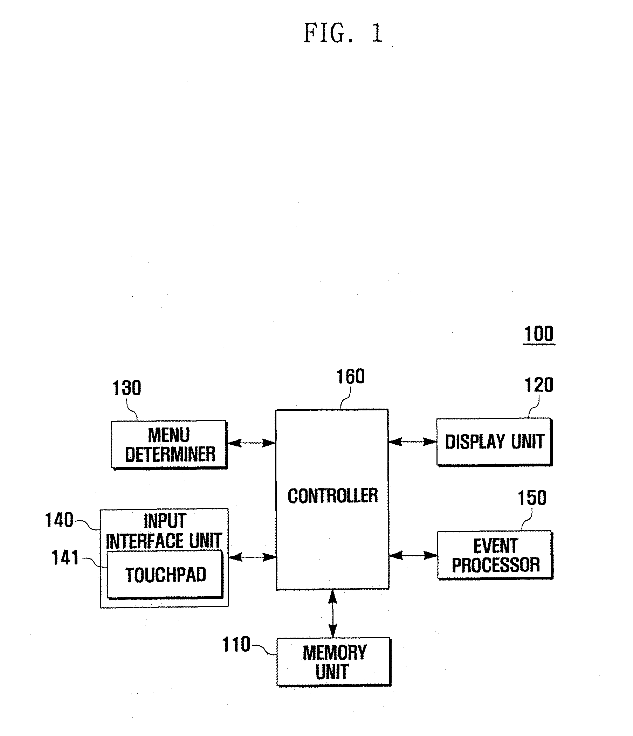

FIG. 1 illustrates a configuration of a user interface providing apparatus for a portable terminal according to the present invention. Referring to FIG. 1, the user interface providing apparatus 100 includes a memory unit 110, a display unit 120, a menu determiner 130, an input interface unit 140 including a touchpad 141, an event processor 150, and a controller 160.

The display unit 120 displays operation modes and states of the user interface providing apparatus 100. In particular, in response to a request input from the touchpad 141 for a lower menu level of a given menu item, the display unit 120 displays at least one menu item of the requested lower menu level. For example, when a given menu item 'Artist' has lower-level menu items 'AAA', 'BBB' and 'CCC', the display unit 120 displays the menu items 'AAA', 'BBB' and 'CCC' in response to a lower-level menu request from the touchpad 141.

The display unit 120 places a highlight on a predetermined one of the plurality of displayed menu items. In particular, when the highlight is moved to a menu item having lower-level menu items, the display unit 120 displays the menu item together with the lower-level menu items, and places the highlight on a predetermined one, for example the first one, of the lower-level menu items, under the control of the controller 160. The display unit 120 may also display the lower-level menu items in a separate window.

The memory unit 110 stores programs and related data necessary for operation of the user interface providing apparatus 100 and for control operation of the controller 160, and may be composed of various memory devices such as an Erasable Programmable Read Only Memory (EPROM), Static Random Access Memory (SRAM) and flash memory. In particular, the memory unit 110 stores user interface programs, temporarily stores data resulting from execution of the programs, and stores menu items in the form of a database. Preferably, the memory unit 110 stores menu items of the user interface providing apparatus 100 together with mappings between higher and lower level menu items.

The menu determiner 130 determines whether a menu item displayed through the display unit 120 has a lower-level menu item, and prefer ably informs the controller 160 of the existence of a lower-level menu item. For example, when menu items 'Artist', 'Title' and the like are displayed on the display unit 120 and the menu item 'Artist' has lower-level menu items 'AAA', 'BBB' and 'CCC', the menu determiner 130 can identify the menu items 'AAA', 'BBB' and 'CCC' as a lower-level menu item of the menu item 'Artist', and inform the controller 160 of the identified result.

The input interface unit 140 may include various devices such as a keypad, touch screen and touchpad, and is used to select a desired function by the user or to input desired user information. Preferably, the input interface unit 140 includes the touchpad 141 to, for example, select a desired menu item according to user selections.

The input interface unit 140 also identifies an input event by analyzing the start location, direction, speed and the like of the event. Preferably, an event is a scroll event or a touch event.

The event processor 150 processes an event from the input interface unit 140. Preferably, if a scroll event is input from the input interface unit 140, the event processor 150 moves the highlight between displayed menu items.

The controller 160 controls overall operation and states of the user interface providing apparatus 100, and may include a microprocessor or Digital Signal Processor (DSP). The controller 160 receives information on lower-level menu items of menu items displayed on the display unit 120 from the menu determiner 130. If the highlight is moved to a displayed menu item having lower-level menu items in response to a scroll event, the controller 160 controls the display unit 120 to display the menu item together with the lower-level menu items thereof and to place the highlight on a predetermined one of the lower-level menu items.

During simultaneous display of a higher-level menu item and related lower-level menu items, when a scroll event is input from the input interface unit 140, the controller 160 controls the event processor 150 to move the highlight from one of the lower-level menu items to another one at the same menu level. After placement of the highlight on the last lower-level menu item, in response to a scroll event, the controller 160 controls the event processor 150 to move the highlight to one of the higher-level menu items, and also controls the display unit 120 to display the highlighted menu item.

In addition, after placement of the highlight on one of the lower-level menu items, if a signal is not input within a preset time period (preferably 5 seconds), the controller 160 controls the display unit 120 to display only the higher-level menu items. Alternatively, after placement of the highlight on one of the lower-level menu items, if a signal is not input within a preset time period, the controller 160 may enter into the highlighted lower-level menu item. For example, if the highlighted menu item is executable, it is executed. If the highlightedmenu item has a lower menu level, the lower menu level is displayed.

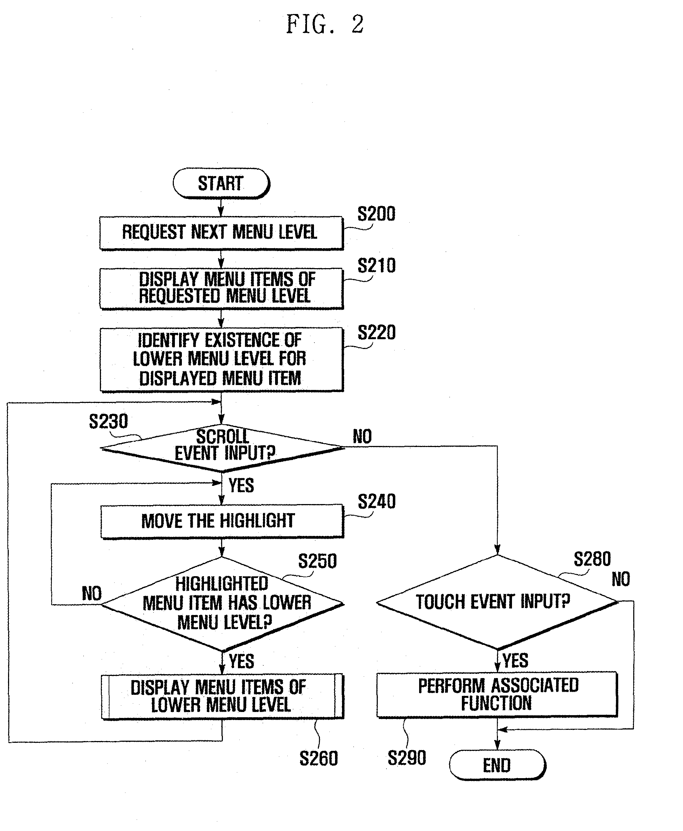

FIG. 2 is a flow chart illustrating a user interface providing method for a portable terminal according to an embodiment of the present invention. Referring to FIGS. 1 and 2, the method is described as follows. When a request for a lower menu level of a selected menu item is input through the touchpad 141 (S200), the controller 160 displays at least one menu item belonging to the requested lower menu level through the display unit 120 (S210). For example, when a selected menu item 'Art' has lower-level menu items 'LLL', 'MMM' and 'NNN', the menu determiner 130 identifies the lower-level menu items 'LLL', 'MMM' and 'NNN' of the menu item 'Art' , and sends the identified information to the controller 160. The controller 160 receives information regarding a lower menu level of each displayed menu item from the menu determiner 130 (S220).

The controller 160 determines whether a scroll event is input through the input interface unit 140 (S230). If a scroll event is input, the controller 160 controls the event processor 150 to place the highlight on one of the displayed menu items, and displays the highlighted menu item through the display unit 120 (5240).

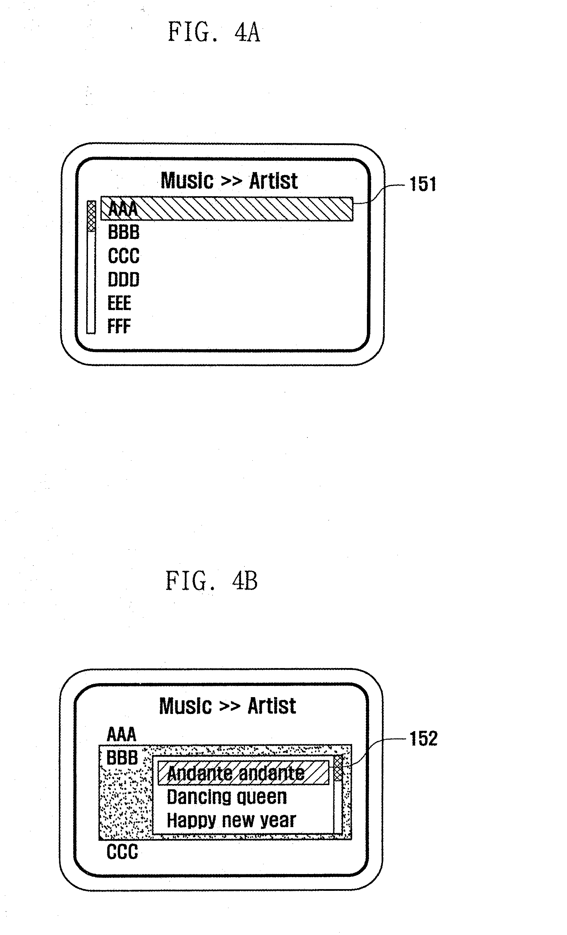

For example, referring to FIG. 4A, in response to a request input through the input interface unit 140 for a lower menu level of a menu item 'Artist', the controller 160 identifies lower-level menu items 'AAA', 'BBB' and 'CCC' of the menu item 'Artist' through the menu determiner 130, and displays the identified lower-level menu items through the display unit 120. Then, in response to a scroll event, the controller 160 controls the event processor 150 to move the highlight to the menu item 'AAA'.

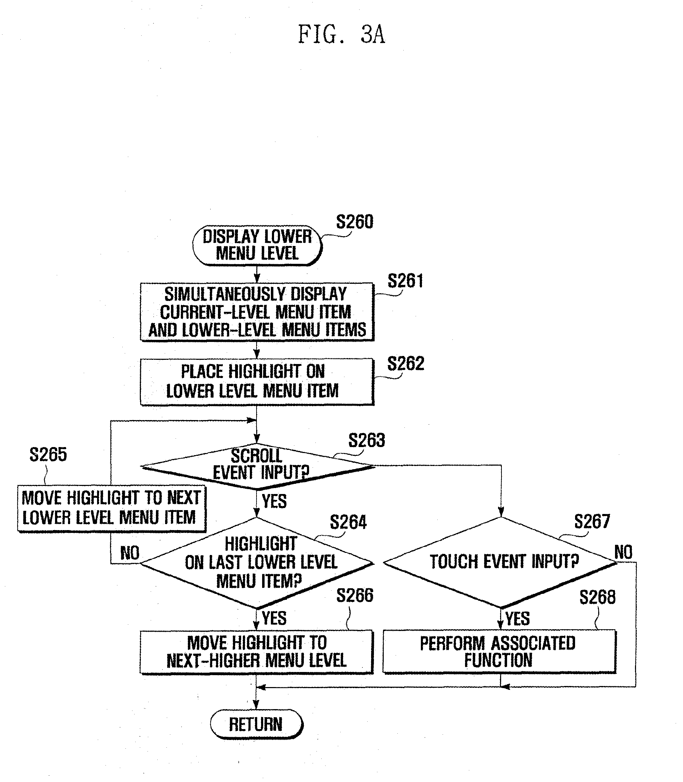

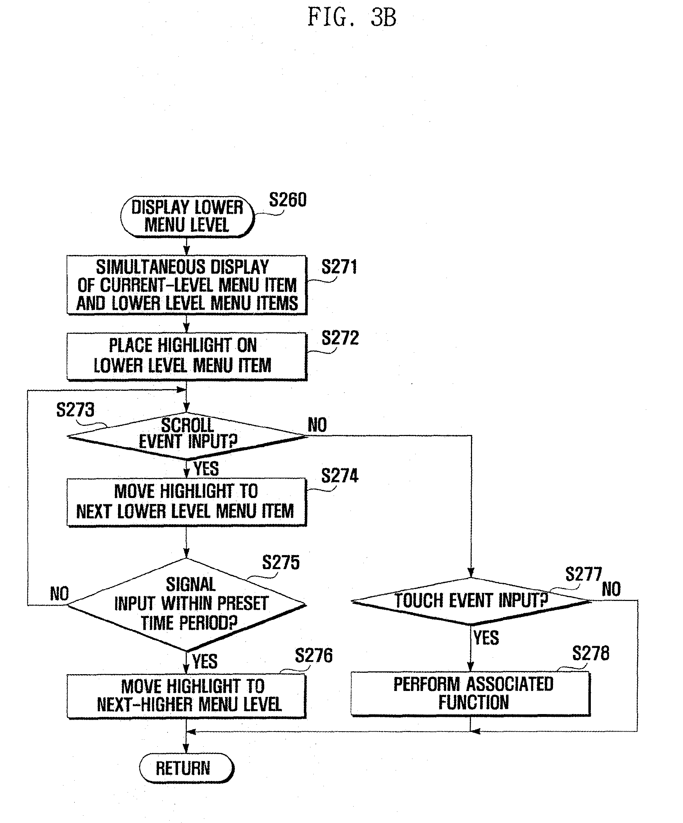

The controller 160 controls the menu determiner 130 to determine whether the highlight is placed on a menu item having a lower menu level (S250). If the highlight is placed on a menu itemhaving a lower menu level, the controller 160 controls the display unit 120 to display lower-level menu items of the highlighted menu item (S260). The lower-level menu items may be displayed in a separate window. Step S260 is described in more detail in relation to FIGS. 3A and 3B.

If a scroll event is not input at step S230, the controller 160 determines whether a touch event is input through the input interface unit 140 (S280). If a touch event is input, the controller 160 performs a corresponding operation (S290). For example, in response to input of a touch event through the input interface unit 140 during display of a menu item 'BBB', the controller 160 identifies the existence of a lower menu level of the menu item 'BBB' through the menu determiner 130. If a lower menu level exists, the controller 160 preferably displays menu items 'Andante Andante', 'Dancing Queen', 'Happy New Year' belonging to the lower menu level through the display unit 120. Further, in response to input of another touch event through the input interface unit 140 during placement of the highlight on the menu item 'Andante Andante', the controller 160 identifies the existence of a lower menu level of the menu item 'Andante Andante' through the menu determiner 130. If a lower menu level does not exist, the controller 160 executes the menu item 'Andante Andante'. For example, if the menu item 'Andante Andante' is associated with an audio file, the controller 160 preferably plays the audio file through audio signal processing.

FIGS. 3A and 3B are flow charts illustrating procedures to display lower-level menu items in the method of FIG. 2. The flowcharts of FIGS. 3Aand 3B illustrate different examples of step S260 in FIG. 2 for displaying lower-level menu items.

Referring to FIGS. 1 and 3A, a first example of step S260 in FIG. 2 is described. The controller 160 controls the display unit 120 to simultaneously display a menu item and its lower-level menu items (S261), and to place the highlight on, preferably, the first one of the lower-level menu items (S262). The controller 160 determines whether a scroll event is input through the input interface unit 140 (S263). If a scroll event is input, the controller 160 determines whether the highlight is currently placed on the last one of the lower-level menu items (S264). If the highlight is not placed on the last lower-level menu item, the controller 160 controls the event processor 150 to move the highlight to the next menu item at the same menu level (S265).

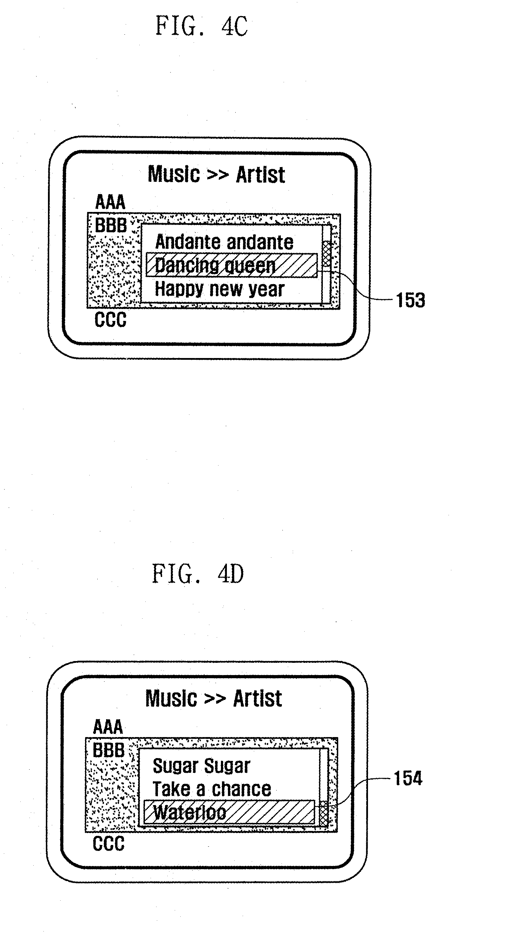

For example, referring to FIG. 4B, the controller 160 identifies the existence of a lower menu level of the menu item 'BBB' through the menu determiner 130, and displays menu items 'Andante Andante', 'Dancing Queen', 'Happy New Year' belonging to the lower menu level through the display unit 120. In response to input of a scroll event through the input interface unit 140, the controller 160 controls the event processor 150 to move the highlight to the first lower-level menu item 'Andante Andante' 152. In response to input of another scroll event through the input interface unit 140, the controller 160 controls the event processor 150 to move the highlight to the second lower-level menu item 'Dancing Queen' 153, as illustrated in FIG. 4C. The controller 160 then repeats step 263 and subsequent steps.

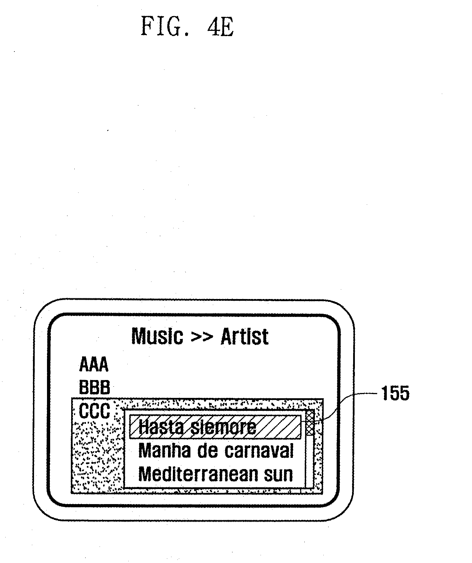

If the highlight is determined to be placed on the last lower-level menu item at step S264, the controller 160 controls the event processor 150 to move the highlight to a menu item belonging to a next-higher menu level (S266). For example, referring to FIG. 4D, after identification of the existence of a lower menu level of the menu item 'BBB' and display of menuitems 'Andante Andante', 'Dancing Queen', 'HappyNewYear' belonging to the lower menu level, in response to repeated input of a scroll event through the input interface unit 140, the controller 160 controls the event processor 150 to move the highlight to the last lower-level menu item 'Waterloo' 154.**[PLEASE UPDATE TRANSLATED FIGURE 4D. IN THE TRANSLATED FIGURE, FIG.4D IS IDENTICAL TO FIG 4C, OTHER THAN NUMBER 154 REPLACING 153.]** for display through the display unit 120. Further, referring to FIG. 4E, in response to input of another scroll event through the input interface unit 140, the controller 160 controls the event processor 150 to move the highlight to a next-higher menu level and place the highlight on a first lower-level menu item 'Hasta Siemore' 155 of the menu item 'CCC' (the next one of the menu item 'BBB') for display through the display unit 120.

If a scroll event is not input at step S263, the controller 160 determines whether a touch event is input (S267). If a touch event is input, the controller 160 performs a corresponding operation on the highlighted menu item (S268).

Referring to FIGS. 1 and 3B, a second example of step S260 in FIG. 2 is described. The controller 160 controls the display unit 120 to simultaneously display a menu item and its lower-level menu items (S271), and to place the highlight on a predetermined one of the plurality of lower-level menu items (S272) . The controller 160 determines whether a scroll event is input through the input interface unit 140 (S273). If a scroll event is input, the controller 160 controls the event processor 150 to move the highlight to the next menu item at the same menu level (S274).

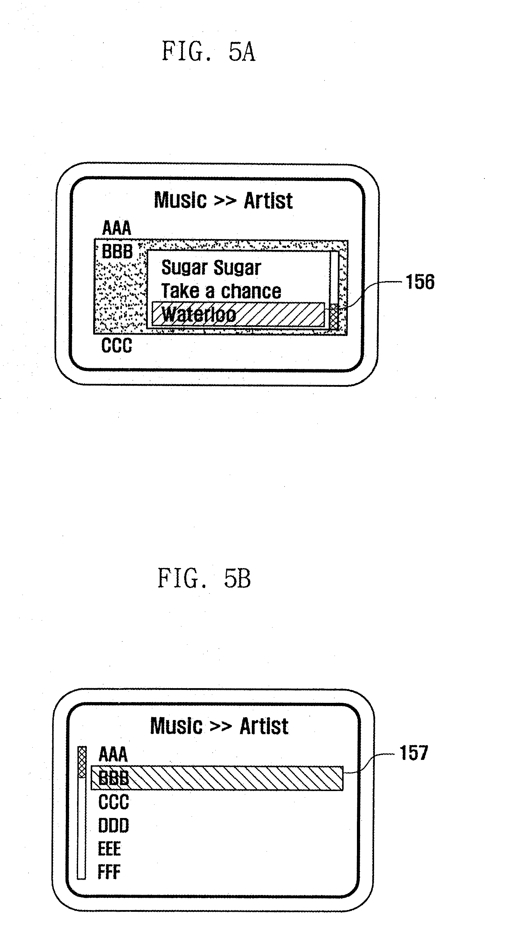

The controller 160 determines whether a signal is input within a preset time period (S275). If a signal is not input, the controller 160 controls the display unit 120 to display only menu items belonging to a next-higher menu level of the currently highlighted menu item (S276). For example, referring to FIG. 5A, in response to input of a scroll event through the input interface unit 140, the controller 160 controls the event processor 150 to place the highlight on the last lower-level menu item 'Waterloo' 156 of the menu item 'BBB' for display through the display unit 120. If a signal is not input for a preset time period, the controller 160 controls the display unit 120 to place the highlight on the menu item 'BBB' 157, as illustrated in FIG. 5B.

If a scroll event is not input at step S273, the controller 160 determines whether a touch event is input (S277). If a touch event is input, the controller 160 performs a corresponding operation on the highlighted menu item (S278).

As apparent from the above description, the present invention provides a method and apparatus for a user interface foratouchpad-equipped portableterminal. Whenaparticular one of the menu items belonging to a current menu level has a lower menu level, current-level menu items and lower-level menu items belonging to the lower menu level are simultaneously displayed. Hence, lower-level menu items can be known in advance without explicit selection of a corresponding current-level menu item, thereby enhancing menu selection convenience. In addition, in response to input of a scroll event, the highlight is moved directly from a current-level menu item to a lower-level menu item, thereby reducing the number of key inputs necessary for desired menu selection.

While preferred embodiments of the present invention have been shown and described in this specification, it will be understood by those skilled in the art that various changes or modifications of the embodiments are possible without departing from the spirit and scope of the invention as defined by the appended claims.

## Claims

1. A user interface providing apparatus for a portable terminal having a touchpad, comprising:
a display unit for displaying, in response to a request input through the touchpad for a lower menu level of a specific menu item, at least one item belonging to the requested lower menu level;
a menu determiner for determining existence of a lower level menu item of a displayed menu item;
an input interface unit for inputting a scroll event from the touchpad;
an event processor for moving, in response to input of a scroll event, a highlight between displayed menu items; and
a controller for controlling, if a highlighted menu item has a lower menu level, a display operation to simultaneously display the highlighted menu item and menu items of the lower menu level, and to place the highlight on one of a plurality of lower-level menu items.

2. The user interface providing apparatus of claim 1, wherein the display unit displays the highlighted menu item and the plurality of lower-level menu items in different windows.

3. The user interface providing apparatus of claim 1, wherein the controller controls, in response to a scroll event during simultaneous display of the highlighted menu item and the plurality of lower-level menu items, a display operation to move the highlight between the plurality of lower-level menu items in sequence.

4. The user interface providing apparatus of claim 3, wherein the controller controls, in response to a scroll event while the highlight is positioned on a last lower-level menu item, a display operation to move the highlight to a next-higher level menu item of the last lower-level menu item.

5. The user interface providing apparatus of claim 1, wherein the controller controls, if a signal is not input for a preset time period after placement of the highlight on a lower-level menu item, a display operation to display only next-higher level menu items of the lower-level menu item.

6. The user interface providing apparatus of claim 1, wherein the controller performs, if a signal is not input for a preset time period after placement of the highlight on a lower-level menu item, a function associated with the highlighted menu item.

7. A user interface providing method for a portable terminal having a touchpad, comprising:
displaying, in response to a request input through the touchpad for a lower menu level of a specific menu item, at least one item belonging to the requested lower menu level;
determining existence of a lower level menu item of the at least one displayed menu item;
moving, in response to input of a scroll event from the touchpad, a highlight between displayed menu items; and
simultaneously displaying, if a highlighted menu item has a lower menu level, the highlighted menu item and menu items of the lower menu level, and placing the highlight on one of a plurality of lower-level menu items.

8. The user interface providing method of claim 7, wherein in the simultaneously displaying step the highlighted menu item and the plurality of lower-level menu items are displayed in different windows.

9. The user interface providing method of claim 7, further comprising sequentially moving, in response to a scroll event during simultaneous display of the highlighted menu item and the plurality of lower-level menu items, the highlight between the plurality of lower-level menu items.

10. The user interface providing method of claim 9, wherein in the sequentially moving step, in response to a scroll event while the highlight is positioned on a last lower-level menu item, the highlight is moved to a next higher-level menu item of the last lower-level menu item.

11. The user interface providing method of claim 7, further comprising displaying, if a signal is not input for a preset time period after placement of the highlight on a lower-level menu item, only next higher-level menu items of the lower-level menu item.

12. The user interface providing method of claim 7, further comprising performing, if a signal is not input for a preset time period after placement of the highlight on a lower-level menu item, a function associated with the highlighted menu item.
